# EUROPEAN PATENT APPLICATION

(11) **EP 3 136 327 A1**
(43) Date of publication of application: **01.03.2017**
(21) Application number: 16172293.9
(22) Date of filing: 31.05.2016
(51) Int. Cl.: G06Q 20/32, G06Q 20/40, G06F 21/36, G06F 3/0481, G06F 3/0488

(54) **MOBILE PAYMENT METHOD, DEVICE, COMPUTER PROGRAM AND RECORDING MEDIUM**

(30) Priority: 31.08.2015 CN 201510549852
(71) Applicant: Xiaomi Inc., Beijing 100085 (CN)
(72) Inventor: GAO, Yi, Beijing 100085 (CN); WANG, Hongqiang, Beijing 100085 (CN); GE, Yunyuan, Beijing 100085 (CN)
(74) Representative: Cougard, Jean-Marie

(57) **Abstract**

The present disclosure relates to a mobile payment method and device, a computer program and a recording medium, wherein the mobile payment method comprises: setting (S101) a payment operation state to be an operation-invalid state when receiving payment information; receiving (S102) a hardware operation instruction input by a user; and updating (S103) the payment operation state to be an operation-valid state if the hardware operation instruction meets a preset condition. The preset condition comprises that the hardware information in the hardware operation instruction is consistent with the preset hardware information. With respect to embodiments of the present disclosure, mobile payment operation may be completed only after payment confirmation by hardware, thereby greatly improving the safety of the capital of the user.

## Description

### TECHNICAL FIELD

The disclosure relates to the technical field of mobile payment, particularly to a mobile payment method and device, a computer program and a recording medium.

### BACKGROUND

With the rapid development of mobile terminal technology, a variety of smart mobile terminals, such as a mobile phone and the like, have been very popular and have an increasingly powerful function. For example, with the growth of online-shopping need through mobile network, a user can use a mobile phone to carry out (or implement) mobile payment.

The mobile payment, as a means of payment and due to its convenience, has been more and more sought after by consumers. However, with the rapid development of the mobile payment, the security issue has become increasingly serious. For example, when the mobile payment is implemented, some virus software on a mobile apparatus of the user can easily steal the user's account and password, and then directly implement transaction which is not authorized by the user, thereby causing financial loss to the user.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To overcome the problems of related technology, the disclosure provides a mobile payment method and device, a computer program and a recording medium.

According to a first aspect of embodiments of the present disclosure, there is provided a method of mobile payment, comprising,

setting a payment operation state to be an operation-invalid state when receiving payment information;

receiving a hardware operation instruction input by a user; and

updating the payment operation state to be an operation-valid state if the hardware operation instruction meets a preset condition, wherein the preset condition comprises that the hardware information in the hardware operation instruction is consistent with a preset hardware information.

With respect with the embodiment of the mobile payment method, the mobile payment operation is completed by receiving the hardware operation instruction, and by updating the payment operation state from the operation-invalid state to the operation-valid state when the received hardware operation instruction meets the preset condition. That is, the mobile payment operation may be completed only after a payment confirmation by hardware, thereby greatly improving the safety of the capital of the user.

In one embodiment, said updating the payment operation state to be an operation-valid state further comprises:

determining that the hardware operation instruction meets the preset condition if hardware information in the received hardware operation instruction is consistent with the preset hardware information, when the preset hardware information comprises one piece of preset hardware information.

In one embodiment, said updating the payment operation state to be an operation-valid state further comprises:

obtaining the hardware information in two hardware operation instructions received sequentially and the reception time of each hardware operation instruction, when the preset hardware information is two pieces of preset hardware information;

obtaining the reception time of the two hardware operation instructions when the hardware information in two received hardware operation instructions is consistent with the preset hardware information, if the two pieces of the hardware information obtained in order (or sequentially) are consistent with the preset hardware information;

determining whether a reception time interval of the two hardware operation instructions is less than a first preset threshold according to the reception time of the two hardware operation instructions if the two pieces of hardware information received sequentially in said two hardware operation instructions are consistent with the two pieces of preset hardware information, wherein the hardware operation instructions meet the preset condition if the reception time interval is less than the first preset threshold.

In one embodiment, said updating the payment operation state to be an operation-valid state further comprises:

obtaining the hardware information in two hardware operation instructions received sequentially and a reception time of each hardware operation instruction, when the preset hardware information comprises two pieces of preset hardware information; and

determining whether a reception time interval of the two hardware operation instructions is less than a first preset threshold according to the reception time of the two hardware operation instructions, if the two pieces of hardware information received sequentially in said two hardware operation instructions are consistent with the two pieces of preset hardware information, wherein the hardware operation instructions meet the preset condition if the reception time interval is smaller than the first preset threshold.

In one embodiment, said updating the payment operation state to be an operation-valid state further comprises:

obtaining the hardware information in hardware operation instructions received sequentially and a reception time of each hardware operation instruction when the preset hardware information is at least three pieces of preset hardware information; and

determining whether a reception time interval of two consecutive (or adjacent) hardware operation instructions is less than a second preset threshold according to the reception time of said hardware operation instructions, if the pieces of preset hardware information received sequentially in said hardware operation instructions are consistent with the at least three pieces of preset hardware information, wherein the hardware operation instructions meet the preset condition if the reception time interval is less than the second preset threshold.

With respect to the above embodiment of the mobile payment method, as the preset hardware information is different, the way of determining whether the hardware operation instruction meets the preset condition is different, thereby realizing a flexible means. Meanwhile, when the preset hardware information comprises a plurality of pieces of the hardware information, the hardware is more difficult to be confirmed. Therefore, the safety of the mobile payment may be greatly improved.

In an embodiment, the method further comprises:

displaying the first prompt information when the payment operation state is set to be an operation-invalid state, wherein the first prompt information is configured to remind the user to implement mobile payment in accordance with the hardware operation instruction.

With respect to the above embodiment of the mobile payment method, the user may be guided to implement a subsequent operation by displaying the first prompt information.

In an embodiment, the method further comprises:

counting the number of times that the received hardware operation instruction does not meet the preset condition (if the hardware operation instruction does not meet the preset condition);

cancelling the current mobile payment operation if the number of times equals to a preset number of times; and

displaying second prompt information if the number of times is less than the preset number of times, wherein the second prompt information is configured to remind the user to re-implement the mobile payment in accordance with the hardware operation instruction and receive the hardware operation instruction re-input by the user.

With respect to the above embodiment of the mobile payment method, the current mobile payment operation is cancelled when the times that the hardware operation instruction does not continuously meet the preset condition is less than the preset times, so that an illegal user cannot implement the mobile payment operation, thereby avoiding the capital loss to the user. The second prompt information is displayed when the times that the hardware operation instruction does not continuously meet the preset condition is less than the preset times, to remind the user how to implement the subsequent operation, therefore provide the user with convenience.

In an embodiment, the method further comprises:
displaying a hardware information list;
receiving a hardware selecting instruction input by the user, and selecting one or more pieces of hardware information from the hardware information list according to the hardware selecting instruction; and
generating the preset hardware information according to said one or more selected pieces of the hardware information, and saving the preset hardware information.

With respect to the above embodiment of the mobile payment method, the user may be provided with convenience to acquire the hardware information list by displaying the hardware information list, the preset hardware information is generated by selecting one or more pieces of the hardware information from the hardware information list according to the received hardware selecting instruction, so as to provide condition for determining subsequently whether the hardware operation instruction meets the preset condition.

In an embodiment, the method further comprises:
acquiring a payment operation instruction input by the user, wherein the payment operation instruction comprises operation gesture information; and
displaying a payment result when the payment operation instruction meets a preset payment condition.

With respect to the above embodiment of the mobile payment method, the payment is implemented by a manner of the combination of software and hardware, which can not only ensure payment safety but also display the payment result. Therefore, the user conveniently obtains payment situation.

According to a second aspect of embodiments of the present disclosure, there is provided a mobile payment device, comprising,
a receiving setting module configured to set a payment operation state to be an operation-invalid state when receiving payment information;
a receiving module configured to receive a hardware operation instruction input by a user;
a determining updating module configured to update the payment operation state set by the receiving setting module to be an operation-valid state if the hardware operation instruction received by the receiving module meets the preset condition, wherein the preset condition comprises that the hardware information in the hardware operation instruction is consistent with preset hardware information.

With respect with the embodiment of the mobile payment device, the mobile payment operation is completed by receiving the hardware operation instruction by the receiving module, and by updating the payment operation state from the operation-invalid state to the operation-valid state by the determining updating module when the hardware operation instruction received by the receiving module meets the preset condition. That is, the mobile payment operation may be completed only after a payment confirmation by hardware, thereby greatly improving the safety of the capital of the user.

In an embodiment, the determining updating module comprises;
a first determining updating submodule configured to determined that the hardware operation instruction meets the preset condition if hardware information in the received hardware operation instruction is consistent with the preset hardware information, when the preset hardware information comprises one piece of preset hardware information.

In an embodiment, the determining updating module comprises:
a second determining updating submodule configured to obtain the hardware information in two hardware operation instructions received sequentially (in order) and the reception time of each hardware operation instruction when the preset hardware information comprises two pieces of preset hardware information; and configured to determine whether a reception time interval of the two hardware operation instructions is less than a first preset threshold according to the reception time of the two hardware operation instructions if the two pieces of preset hardware information received sequentially in said two hardware operation instructions are consistent with the two pieces of preset hardware information, wherein the hardware operation instruction meets the preset condition if the reception time interval is less than the first preset threshold.

In an embodiment, the determining updating module comprises:
a third determining updating submodule configured to obtain the hardware information in received hardware operation instructions received sequentially (or in order) and the reception time of each hardware operation instruction when the preset hardware information comprises at least three pieces of preset hardware information; and configured to determine whether the reception time interval of two consecutive (or adjacent) hardware operation instructions is less than a second preset threshold according to the reception time of said hardware operation instructions if the pieces of preset hardware information received sequentially are consistent with said at least three pieces of preset hardware information, wherein the hardware operation instructions meet the preset condition if the reception time interval is less than the second preset threshold.

With respect to the above embodiment of the mobile payment device, as the preset hardware information is different, the way of determining whether the hardware operation instruction meets the preset condition is different, thereby realizing a flexible means. Meanwhile, the confirmation difficulty of the hardware is increased by determining whether the hardware operation instruction meets the preset condition when the second and the third determining updating submodules comprise a plurality of pieces of the hardware information. Therefore, the safety of the mobile payment may be greatly improved.

In an embodiment, the device further comprises:
a first display module configured to display the first prompt information when the received setting module sets the payment operation state to be the operation-invalid state, wherein the first prompt information is configured to remind the user to implement the mobile payment in accordance with the hardware operation instruction.

With respect to the embodiment of the mobile payment device, the user may be guided to implement a subsequent operation by displaying the first prompt information by the first display module.

In an embodiment, the device further comprises:
a determining counting module configured to count the number of times that the received hardware operation instruction does not meet the preset condition (if the hardware operation instruction received by the receiving module does not meet the preset condition);
a cancelling module configured to cancel a current mobile payment operation if the times counted by the determining counting module equals to the preset number of times; and
a second display module configured to display second prompt information if the number of times counted by the determining counting module is less than the preset number of times, wherein the second prompt information is configured to remind the user to re-implement the mobile payment in accordance with the hardware operation instruction and receive the hardware operation instruction re-input by the user.

With respect to the above embodiment of the mobile payment device, the cancelling module cancels the current mobile payment operation when the times that the hardware operation instruction does not continuously meet the preset condition equals to the preset times, so that an illegal user cannot implement the mobile payment operation, thereby avoiding the capital loss to the user. The second display module displays the second prompt information when the times that the hardware operation instruction does not continuously meet the preset condition is less than the preset times, to remind the user how to implement the subsequent operation, therefore provide the user with convenience.

In an embodiment, the device further comprises:
a list display module configured to display a hardware information list;
a receiving selecting module configured to receive a hardware selecting instruction input by the user and select one or more pieces of the hardware information from the hardware information list displayed by the list display module according to the hardware selecting instruction;
a generating saving module configured to generate the preset hardware information according to said one or more selected pieces of the hardware information selected by the receiving selecting module, and save the preset hardware information.

With respect to the embodiment of the mobile payment device, the user is provided with convenience to acquire the hardware information list by displaying the hardware information list by the list display module, and the preset hardware information is generated by selecting one or more pieces of the hardware information from the hardware information list according to the received hardware selecting instruction by the receiving selecting module, so as to provide condition for determining subsequently whether the hardware operation instruction meets the preset condition.

In an embodiment, the device further comprises:
an acquiring module configured to acquire a payment operation instruction input by the user, wherein the payment operation instruction comprises operation gesture information; and
a determining display module configured to display a payment result when the payment operation instruction acquired by the acquiring module meets the preset payment condition.

With respect to the above embodiment of the mobile payment device, the payment is implemented by a manner of the combination of software and hardware, which can not only ensure payment safety but also display a payment result. Therefore, the user conveniently obtains payment situation.

According to a third aspect of embodiments of the present disclosure, there is provided a mobile payment device, comprising,
a processor;
a memory for storing an instruction executable by the processor;
wherein the processor is configured to:
setting a payment operation state to be an operation-invalid state when receiving payment information;
receiving a hardware operation instruction input by a user;
updating the payment operation state to be an operation-valid state if the hardware operation instruction meets a preset condition, wherein the preset condition comprises that the hardware information in the hardware operation instruction is consistent with preset hardware information.

With the embodiment of the mobile payment device, a mobile payment operation can be completed only with payment and confirmation by software and hardware, thereby greatly increasing the safety of the capital of the user.

In one particular embodiment, the steps of the mobile payment method are determined by computer program instructions.

Consequently, according to a fourth aspect, the invention is also directed to a computer program for executing the steps of a mobile payment method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figure 1 is a flow chart showing a mobile payment method according to an exemplary embodiment.
Figure 2 is a flow chart showing another mobile payment method according to an exemplary embodiment.
Figure 3 is a flow chart showing yetanother mobile payment method according to an exemplary embodiment.
Figure 4a is a scene graph I showing a mobile payment method according to an exemplary embodiment.
Figure 4b is a scene graph II showing a mobile payment method according to an exemplary embodiment.
Figure 4c is a flow chart showing another mobile payment method according to an exemplary embodiment.
Figure 5 is a block diagram showing a mobile payment device according to an exemplary embodiment.
Figure 6 is a block diagram showing another mobile payment device according to an exemplary embodiment.
Figure 7 is a block diagram showing another mobile payment device according to an exemplary embodiment.
Figure 8 is a block diagram showing another mobile payment device according to an exemplary embodiment.
Figure 9 is a block diagram showing another mobile payment device according to an exemplary embodiment.
Figure 10 is a block diagram showing a device adaptive for mobile payment according to an exemplary embodiment.

### DETAILED DESCRIPTION

Reference will now be made in detail to exemplary embodiments, examples of which are illustrated in the accompanying drawings. The following description refers to the accompanying drawings in which the same number in different drawings represents the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

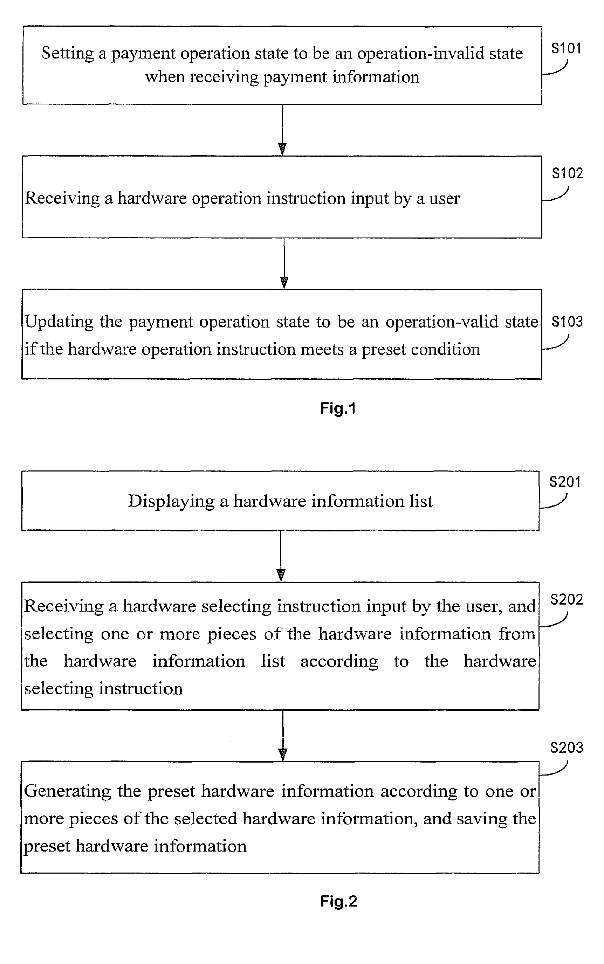

Figure 1 is a flow chart showing a mobile payment method according to an exemplary embodiment. As shown in Figure 1, the mobile payment method may be applied on a mobile terminal. The mobile terminal includes but is not limited to a mobile phone, a tablet computer (PAD), etc. The mobile payment method comprises the following steps S101-S103:

In step S101, setting a payment operation state to be an operation-invalid state when receiving payment information.

In this embodiment, the mobile terminal may set the payment operation state to be the operation-invalid state, for example, set a payment key to be in a non-clickable state, after receiving the payment information, such as a payment amount and a payment account, etc., input by a user.

In step S102, receiving a hardware operation instruction input by the user.

A payment operation cannot be completed after the payment operation state being set to be the operation-invalid state.

The user may click a hardware key to complete the payment operation. Thus, the mobile terminal may receive the hardware operation instruction input by the user. The hardware operation instruction comprises hardware information (i.e. hardware key information) clicked by the user.

In step S103, updating the payment operation state to be an operation-valid state if the hardware operation instruction meets a preset condition.

The preset condition comprises that the hardware information in the hardware operation instruction is consistent with preset hardware information. The hardware information may comprise the hardware key information, for example, a hardware key identifier, operation times of hardware key, etc.

In this embodiment, updating the payment operation state to be the operation-valid state when the received hardware operation instruction meets the preset condition, for example, setting the payment key to be a clickable state. Therefore, the mobile terminal may complete the payment operation after the user clicks the payment key.

With respect to the embodiment of the mobile payment method, the mobile payment operation is completed by receiving the hardware operation instruction, and by updating the payment operation state from the operation-invalid state to the operation-valid state when the received hardware operation instruction meets the preset condition. That is, the mobile payment operation may be completed only after a payment confirmation by hardware, thereby greatly improving the safety of the capital of the user.

Figure. 2 is a flow chart showing another mobile payment method according to an exemplary embodiment. As shown in Figure 2, before the above step S101, the method further comprises the following steps S201-203:

In step S201, displaying a hardware information list.

In this embodiment, the hardware information list may comprise one or more the following hardware keys: a volume key and a power key of the current mobile terminal, as well as one or more of a key inserted into an apparatus of a headphone jack of the current mobile terminal and a volume key on a line control earphone of the current mobile terminal.

The volume key comprises a volume-increase key and a volume-decrease key.

In step S202, receiving a hardware selecting instruction input by the user, and selecting one or more pieces of the hardware information from the hardware information list according to the hardware selecting instruction.

In this embodiment, the user may select one or more pieces of the hardware information from the hardware information list after the mobile terminal displays the hardware information list to be selected by the user. When the user may select one or more pieces of the hardware information from the hardware information list, the mobile terminal receives the hardware selecting instruction input by the user, and then selects one or more pieces of the hardware information from the hardware information list according to the hardware selecting instruction.

The hardware selecting instruction comprises one or more pieces of the hardware information selected by the user, for example, the hardware key information.

In step S203, generating the preset hardware information according to one or more pieces of the selected hardware information, and saving the preset hardware information.

In this embodiment, the preset hardware information may be generated according to one or more pieces of the selected hardware information. For example, the preset hardware information may be generated according to one or more pieces of the selected hardware key information.

With respect to the embodiment of the mobile payment method, the user is provided with convenience to acquire the hardware information list by displaying the hardware information list, and the preset hardware information is generated by selecting one or more pieces of the hardware information from the hardware information list according to the received hardware selecting instruction, so as to provide condition for determining subsequently whether the hardware operation instruction meets the preset condition.

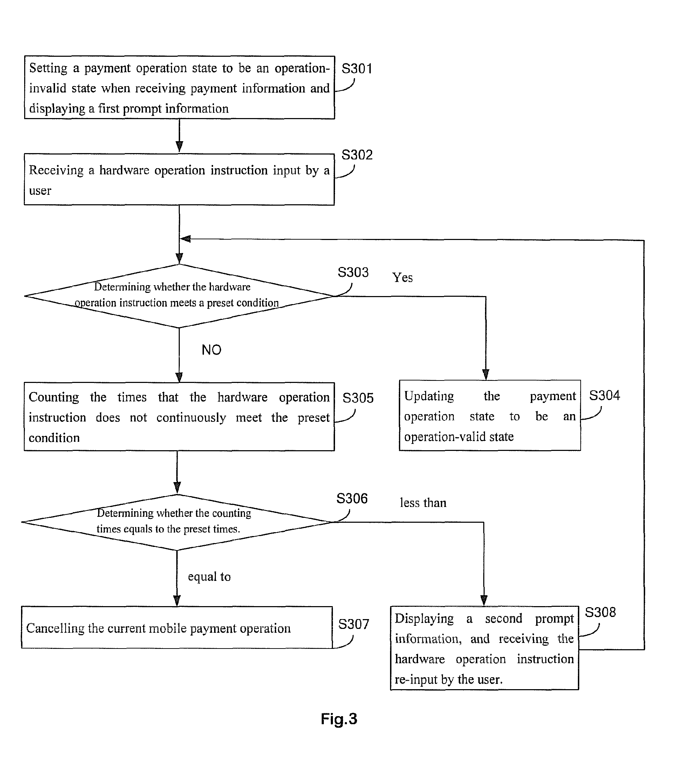

Figure. 3 is a flow chart showing yet another mobile payment method according to an exemplary embodiment. As shown in Figure 3, the method further comprises the following steps S301-308:

In step S301, setting the payment operation state to be the operation-invalid state when receiving payment information, and displaying the first prompt information.

In this embodiment, the mobile terminal may display the first prompt information when the payment operation state is set to be the operation-invalid state, for example, when the payment key is set to be in the non-clickable state. The first prompt information is configured to remind the user to implement the mobile payment with the hardware operation.

For example, the prompt information of "the mobile payment is implemented by clicking the hardware key" may be displayed to facilitate the user to complete the operation of clicking the hardware key according to the prompt information.

Therefore, the user is guided to implement the subsequent operation by displaying the first prompt information.

In step S302, receiving a hardware operation instruction input by the user.

In this embodiment, as the user has preset the hardware information for payment confirmation (for example, the hardware key information), the user may click the preset hardware key according to the above prompt information to realize the payment confirmation of the hardware.

When the user clicks the hardware key, the mobile terminal (for example, the mobile phone) may receive the hardware operation instruction input by the user. The hardware operation instruction comprises hardware key information clicked by the user.

In this embodiment, when the user presets one piece of the hardware key information for the payment confirmation, the user will click one hardware key, and at this time, the mobile terminal may receive one hardware operation instruction. When the user presets two pieces of the hardware key information for the payment confirmation, the user will click two hardware keys, and at this time, the mobile terminal may receive two hardware operation instructions. When the user presets at least three pieces of the hardware key information for the payment confirmation, the user will click at least three hardware keys, and at this time, the mobile terminal may receive at least three hardware operation instructions.

Therefore, the number of the hardware operation instruction corresponds to the number of the keys operated by the user. The mobile terminal may accurately acquire the hardware operation instruction through this corresponding relation.

In step S303, determining whether the hardware operation instruction meets the preset condition. If the hardware operation instruction meets the preset condition, carrying out step S304. If the hardware operation instruction does not meet the preset condition, carrying out step S305.

In step S304, updating the payment operation state to be the operation-valid state.

In this embodiment, when the preset hardware information is one piece of the hardware information, for example, one piece of the hardware key information, the preset condition may be that the hardware information in the hardware operation instruction is consistent with the preset hardware information. When the preset hardware information comprises two pieces of the hardware information, for example, two pieces of the hardware key information, the preset condition may be that the hardware information in two hardware operation instructions received in order is consistent with the preset hardware information, and the time interval between the two hardware operation instructions is less than a first preset threshold. The first preset threshold may be 50 millisecond or 100 millisecond. As the first preset threshold is very small, it may be considered that the two hardware operation instructions are received at the same time. That is, the user needs to click two hardware keys at the same time. When the preset hardware information comprises at least three pieces of the hardware information, for example, three pieces of the hardware key information, the preset condition may be that the hardware information in at least three hardware operation instructions received in order is consistent with the preset hardware information, and the time interval between the two adjacent hardware operation instructions is less than a second preset threshold. The second preset threshold may be 1.5 seconds.

Noted that when the preset hardware information comprises two or more pieces of the hardware information, the received order of the hardware operation instructions may be set. Therefore, when determining whether the hardware operation instruction meets the preset condition, the received order of the hardware operation instructions is taken as one portion of the above preset condition determination. That is, it is determined that the order of the preset condition is met when the received order of the hardware operation instructions is consistent with the stored order of the hardware information comprised in the preset hardware information. Of course, the received order of the rest of the hardware operation instructions may also be set by the user or a system.

For example, the preset hardware information is key 1, key 3 and key 2. If the hardware information in at least three hardware operation instructions received in order are the key 1, the key 3 and key 2 respectively, and the time interval of two adjacent hardware operation instructions is less than 1.5 seconds, the hardware operation instruction meets the preset condition. If the hardware information in at least three hardware operation instructions received in order is the key 1, the key 2 and the key 3 respectively, the hardware operation instruction does not meet the preset condition as the orders of the above two sequence do not correspond to each other.

Therefore, in this embodiment, as the preset hardware information is different, the way of determining whether the hardware operation instruction meets the preset condition is different, thereby realizing a flexible means. Meanwhile, when the preset hardware information comprises a plurality of pieces of the hardware information, the hardware is more difficult to be confirmed. Therefore, the safety of the mobile payment may be greatly improved.

In step S305, counting the times that the hardware operation instruction does not continuously meet the preset condition.

If the hardware information in the received hardware operation instruction is not consistent with the preset hardware information, the hardware operation instruction does not meet the preset condition.

In the embodiment, the times that the hardware operation instruction does not continuously meet the preset condition need to be accounted.

In step S306, determining whether the counting times equals to the preset times. If the times equals to the preset times, carrying out step S307. If it is less than the preset times, carrying out step S308.

In step S307, cancelling the current mobile payment operation.

If the times that the hardware operation instruction does not continuously meet the preset condition are the preset times, for example, three times, the current mobile payment operation is canceled.

In step S308, displaying second prompt information, and receiving the hardware operation instruction re-input by the user and then returning to step S303.

If the times that the hardware operation instruction does not continuously meet the preset condition are one time, which is less than the preset times, the second prompt information may be displayed. The second prompt information is configured to remind the user to re-implement the mobile payment with the hardware operation. When the user clicks the hardware key according to the second prompt information, the mobile terminal receives the hardware operation instruction re-input by the user and then determines whether the hardware operation instruction meets the preset condition. If the hardware operation instruction meets the preset condition, the payment operation state may be updated to be the operation-valid state, to complete the mobile payment operation. If it does not meet the preset condition, the times that the hardware operation instruction does not continuously meet the preset condition are two times. As the two times is less than the preset times three, the second prompt information is continuously displayed and the hardware operation instruction re-input by the user is received. If the hardware operation instruction still does not meet the preset condition, the times that the hardware operation instruction does not continuously meet the preset condition are three times. Therefore, the current mobile payment operation is cancelled.

With respect to the above embodiment of the mobile payment method, the current mobile payment operation is cancelled when the times that the hardware operation instruction does not continuously meet the preset condition equals to the preset times, so that an illegal user cannot implement the mobile payment operation, thereby avoiding the capital loss to the user. The second prompt information is displayed when the times that the hardware operation instruction does not continuously meet the preset condition is less than the preset times, to remind the user how to implement the subsequent operation, and therefore provide the user with convenience.

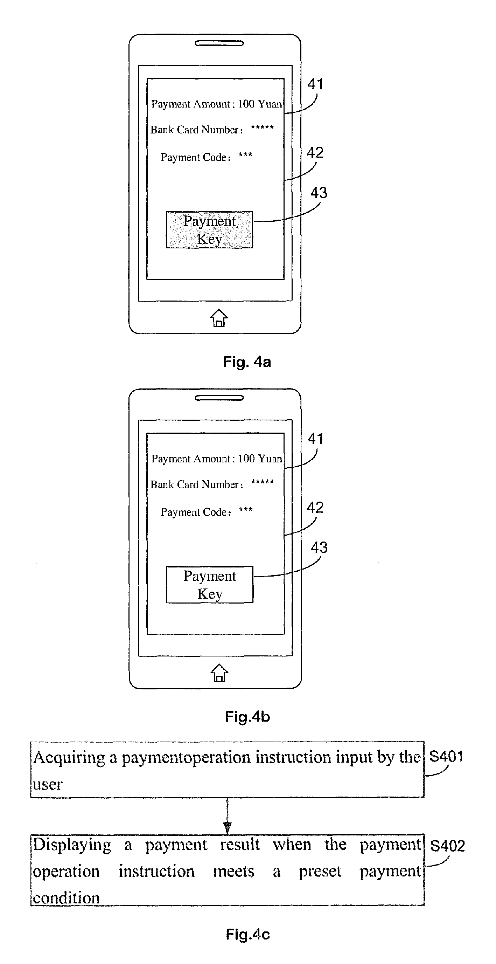

With the combination of Figures 4a-4b, the present disclosure is illustratively described. As shown in Figure 4a, the user implements online shopping with the mobile phone 41 and implements payment with the mobile phone 41. A current payment interface 42 has displayed that the payment amount is 100 yuan. After the user inputs a bank card number and a payment code in the payment interface 42, the mobile phone 41 sets a payment key 43 on the payment interface 42 to be the non-clickable state, and displays the prompt information of "carrying out the mobile payment by the hardware operation". After the user clicks the volume-increase key, if the mobile phone 41 determines that the key clicked by the user is consistent with the preset hardware key, the payment key 43 is updated to be in a clickable state, as shown in Figure 4b. After the user clicks the payment key 43, this payment operation may be completed.

With respect to the above embodiments, the mobile payment operation is completed with the manner of payment conformation of both software and hardware, thereby greatly increasing the safety of the capital of the user and effectively avoiding the capital loss to the user.

Figure 4c is a flow chart showing another mobile payment method according to an exemplary embodiment. As shown in Figure 4c, after the step S103, the method further comprises the following steps S401-402:

In step S401, acquiring the payment operation instruction input by the user.

The payment operation instruction comprises operation gesture information. The operation gesture information may comprise but is not limited to a click, a sliding operation and other operations with a track.

For example, in step S101, after receiving the payment amount, the payment account and the payment code input by the user, the mobile terminal sets the payment operation state to be the operation-invalid state (that is, sets the payment key to be in the non-clickable state), then receives the hardware operation instruction input by the user, and updates the payment operation state to be the operation-valid state when the hardware operation instruction meets the preset condition. After updating the payment operation state to the operation-valid state, that is, after setting the payment key to be in the clickable state, the mobile terminal may acquire the click operation of the payment key by the user.

In addition, the payment operation instruction may still comprise voice information, fingerprint information, etc. Assuming that the payment information in step S101 does not comprise the payment code, the information prompting the user to input code may be displayed when the payment key is clicked. At this time, the user may input the code with a voice manner or may input a fingerprint code. Correspondingly, the payment operation instruction may comprise the voice information or the fingerprint information.

In step S402, displaying a payment result when the payment operation instruction meets a preset payment condition.

The preset condition may comprise that the payment key is triggered, and also may comprise that the code comprised in the payment operation instruction (such as the voice code and the fingerprint code) is consistent with a preset code.

In this embodiment, the payment result, for example, the payment completion or an insufficient balance, is displayed, when the payment operation instruction meets the preset payment condition.

In addition, it need be described that the above step of acquiring the payment operation instruction may be implemented before or after the hardware operation instruction is acquired. This embodiment does not limit the implementing order of acquiring two operation instructions. The above payment result is further displayed when the two above instructions meet the condition corresponding to these instructions, respectively.

With the combination of a method process shown in Figure 4c and Figure 1, in the course of the mobile payment, the above payment operation instruction corresponds to software payment while the hardware operation instruction corresponds to the hardware payment. With respect to the embodiments, the payment is implemented by the manner of the combination of the software and the hardware, which can not only ensure payment safety but also display the payment result. Therefore, the user conveniently obtains payment situation.

Corresponding to the above embodiments of the mobile payment method, the disclosure further provides embodiments of a mobile payment device.

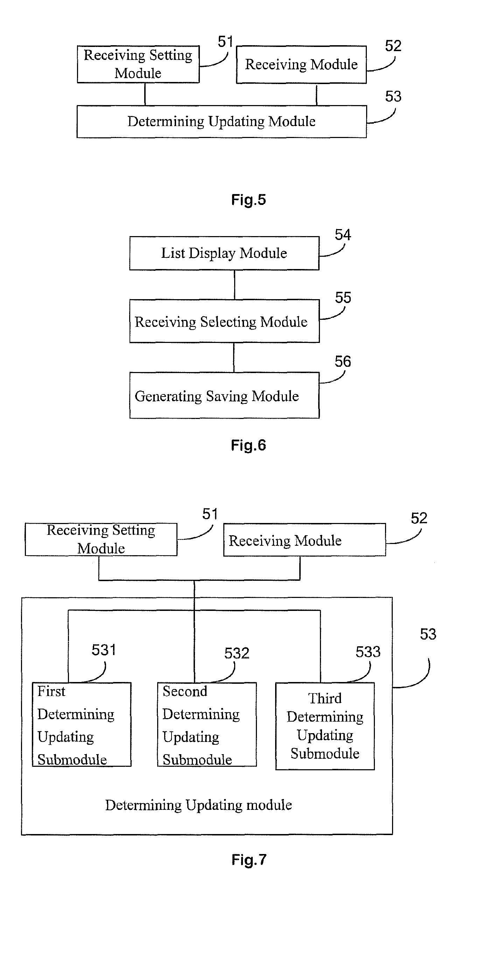

Figure 5 is a block diagram showing a mobile payment device according to an exemplary embodiment. As shown in Figure 5, the mobile payment device comprises a receiving setting module 51, a receiving module 52 and a determining updating module 53.

The receiving setting module 51 is configured to set a payment operation state to be an operation-invalid state when receiving payment information.

The receiving module 52 is configured to receive a hardware operation instruction input by a user.

The determining updating module 53 is configured to update the payment operation state set by the receiving setting module 51 to be an operation-validstate if the hardware operation instruction received by the receiving module 52 meets a preset condition. The preset condition comprises that the hardware information in the hardware operation instruction is consistent with preset hardware information.

The hardware information may comprise hardware key information, for example, a hardware key identifier, operation times of hardware key, etc.

The device as shown in Figure 5 is configured to realize a method process shown in Figure 1. The relevant contents are the same and will not be described in detail any more here.

With respect with the above embodiment of the mobile payment device, the mobile payment operation is completed by receiving the hardware operation instruction by the receiving module, and by updating the payment operation state from the operation-invalid state to the operation-valid state by the determining updating module when the hardware operation instruction received by the receiving module meets the preset condition. That is, the mobile payment operation may be completed only after a payment confirmation by the hardware, thereby greatly improving the safety of the capital of the user.

Figure. 6 is a block diagram showing another mobile payment device according to an exemplary embodiment. As shown in Figure 6, based on the embodiment shown in Figure 5, the device further comprises a list display module 54, a receiving selecting module 55 and a generating saving module 56.

The list display module 54 is configured to display a hardware information list.

The receiving selecting module 55 is configured to receive a hardware selecting instruction input by the user and select one or more pieces of the hardware information from the hardware information list displayed in the list display module 54 according to the hardware selecting instruction.

The generating saving module 56 is configured to generate the preset hardware information according to one or more pieces of the hardware information selected by the receiving selecting module 55,and save the preset hardware information.

The device as shown in Figure 6 is configured to realize a method process shown in Figure 2. The relevant contents are the same and will not be described in detail any more here.

With respect to the embodiment of the mobile payment device, the user is provided with convenience to acquire the hardware information list by displaying the hardware information list by the list display module, and the preset hardware information is generated by selecting one or more pieces of the hardware information from the hardware information list according to the received hardware selecting instruction by the receiving selecting module, so as to provide condition for determining subsequently whether the hardware operation instruction meets the preset condition.

Figure. 7 is a block diagram showing another mobile payment device according to an exemplary embodiment. As shown in Figure 7, based on the embodiment shown in Figure 5, the determining updating module 53 may comprise a first determining updating submodule 531, a second determining updating submodule 532 or a third determining updating submodule 533.

The first determining updating submodule 531 is configured to determine that the hardware operation instruction meets the preset condition if the hardware information in the received hardware operation instruction is consistent with the preset hardware information, when the preset hardware information comprises one piece of the hardware information.

The second determining updating submodule 532 is configured to obtain the hardware information in two received hardware operation instructions in order and the received time of each hardware operation instruction when the preset hardware information is two pieces of the hardware information; and configured to determine whether a received time interval of two hardware operation instructions is less than a first preset threshold according to the received time when two pieces of the hardware information obtained in order are consistent with the preset hardware information. If the received time interval is less than the first preset threshold, the hardware operation instruction meets the preset condition.

The third determining updating submodule 533 is configured to obtain the hardware information in the received hardware operation instructions in order and the received time of each hardware operation instruction when the preset hardware information is at least three pieces of the hardware information; and configured to determine whether the received time interval of two adjacent hardware operation instructions is less than a second preset threshold according to the received time when the hardware information obtained in order is consistent with the preset hardware information. If the received time interval is less than the second preset threshold, the hardware operation instruction meets the preset condition.

The device as shown in Figure 7 is configured to realize a method process shown in Figure 3. The relevant contents are the same and will not be described in detail any more here.

With respect to the above embodiment of the mobile payment device, as the preset hardware information is different, the way of determining whether the hardware operation instruction meets the preset condition is different, thereby realizing the flexible means. Meanwhile, the confirmation difficulty of the hardware is increased by determining whether the hardware operation instruction meets the preset condition when the second and the third determining updating submodules comprise a plurality of pieces of the hardware information. Therefore, the safety of the mobile payment may be greatly improved.

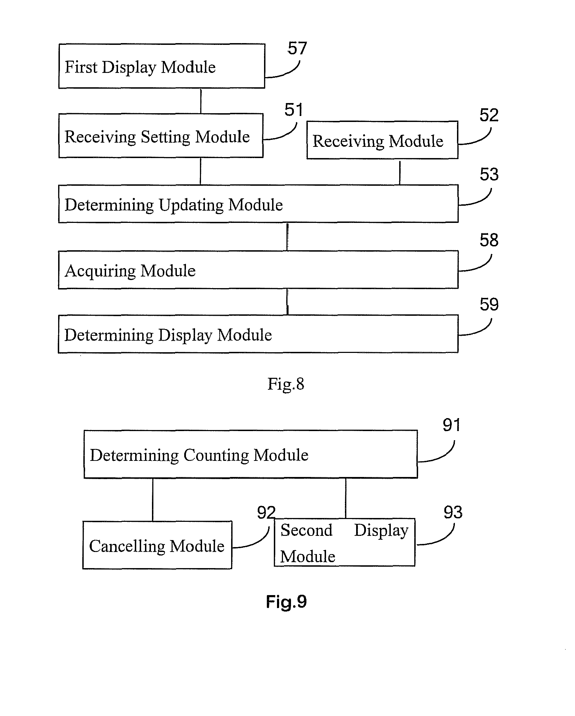

Figure. 8 is a block diagram showing another mobile payment device according to an exemplary embodiment. As shown in Figure 8, based on the embodiment shown in Figure 5, the device may further comprise:

a first display module 57 configured to display a first prompt information when the received setting module 51 sets the payment operation state to be the operation-invalid state. The first prompt information is configured to remind the user to implement the mobile payment with the hardware operation.

In addition, the device may further comprise an acquiring module 58 and a determining display module 59.

The acquiring module 58 is configured to acquire a payment operation instruction input by the user. The payment operation instruction comprises operation gesture information.

The determining display module 59 is configured to display a payment result when the payment operation instruction acquired by the acquiring module 58 meets the preset payment condition.

The device as shown in Figure 8 is configured to realize the method process shown in Figure 3 and Figure 4c. The relevant contents are the same and will not be described in detail any more here.

With respect to the above embodiment of the mobile payment device, the user may be guided to implement a subsequent operation by the first prompt information displayed by the first displaying module. With the acquiring module and the determining display module, the payment is implemented by a manner of the combination of software and hardware, which can not only ensure payment safety but also display the payment result. Therefore, the user conveniently obtains payment situation.

Figure. 9 is a block diagram showing another mobile payment device according to an exemplary embodiment. As shown in Figure 8, based on the embodiment shown in Figure 5, the device may further comprise:

a determining counting module 91 configured to count the times that the hardware operation instruction does not continuously meet the preset condition if the hardware operation instruction received by the receiving module 53 does not meet the preset condition;

a cancelling module 92 configured to cancel a current mobile payment operation if the times counted by the determining counting module 91 equals to preset times;

a second display module 93 configured to display second prompt information if the times counted by the determining counting module 91 is less than the preset times, wherein the second prompt information is configured to remind the user to re-implement the mobile payment with the hardware operation and receive the hardware operation instruction re-input by the user.

The device as shown in Figure 9 is configured to realize the method process shown in Figure 3. The relevant contents are the same and will not be described in detail any more here.

With respect to the above embodiment of the mobile payment device, the cancelling module cancels the current mobile payment operation when the times that the hardware operation instruction does not continuously meet the preset condition equals to the preset times, so that an illegal user cannot implement the mobile payment operation, thereby avoiding the capital loss to the user,. The second display module displays the second prompt information when the times that the hardware operation instruction does not continuously meet the preset condition is less than the preset times, to remind the user how to implement the subsequent operation, and therefore provide the user with convenience.

For the device in the above embodiments, the detailed way of the operation of each module and submodule has been described in details in the embodiments of related methods, and hence will not be described in details any more here.

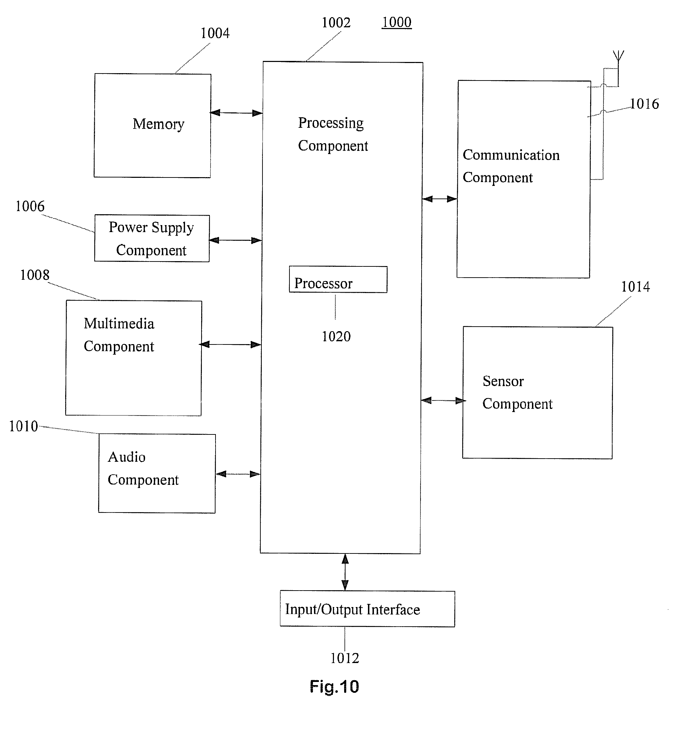

Figure 10 is a block diagram showing a device adaptive for mobile payment according to an exemplary embodiment. For example, the device 1000 may be a mobile phone, a computer, a digital broadcast terminal, a message transceiver, a game console, a tablet apparatus, a medical apparatus, a fitness apparatus, a personal digital assistant, an aircraft, etc.

Referring to Figure 10, the device 1000 may include one or more of the following assemblies: a processing component 1002, a memory 1004, a power supply component 1006, a multimedia component 1008, an audio component 1010, an input/output (I/O) interface 1012, a sensor component 1014, and a communications component 1016.

The processing component 1002 generally controls the whole operations of the device 1000, for example, display, phone call, data communication, camera operation and record operation. The processing component1002 may include one or more processors 1020 to implement an instruction to complete all or part of steps of the above methods. In addition, the processing component1002 may include one or more modules to conveniently process the interaction between the processing component 1002 and other assemblies. For example, the processing component 1002 may include a multimedia module to conveniently facilitate the interaction between the multimedia component 1008 and the processing component 1002.

The memory 1004 is configured to store various types of data to support the operation of the device 1000. The examples of these data include an instruction of any application or method, contact data, address book data, a massage, a picture, a video and the like, and all of them are operated on the device 1000. The memory 1004 may be realized in form of any kind of volatile storage device and non-volatile storage device or combination thereof, for example, Static Random Access Memory (SRAM), Electrically-Erasable Programmable Read Only Memory (EEPROM), Erasable Programmable Read Only Memory (EPROM), Programmable Read Only Memory (PROM), Read Only Memory (ROM), a magnetic memory, a flash memory, a magnetic disk or an optical disk.

The power supply component 1006 provides electricity for various assemblies of the device 1000. The power supply component 1006 may include a power supply management system, one or more power supplies, and other assemblies for generating, managing and distributing electricity to the device 1000.

The multimedia component 1008 includes a screen providing an output interface between the device 1000 and the user. In some embodiments, the screen may be a Liquid Crystal Display (LCD) or a Touch Panel (TP). If the screen includes the touch panel, the screen may be implemented as a touch screen to receive an input signal from the user. The touch panel includes one or more touch sensors to sense the touching, sliding and gestures on the touch panel. The touch sensor may not only sense the border of touching or sliding gesture but also detect the duration time and pressure related to the touching or sliding operation. In some embodiments, the media component 1008 includes one front-facing camera and/or one rear-facing camera. When the device 1000 is under an operation mode, for example, a shooting mode or a video mode, the front-facing camera and/or the rear-facing camera may receive the media data from outside. Each of the front-facing camera and the rear-facing camera may be one fixed optical lens system or may have focal length or optical zoom ability.

The audio component1010 is configured to output and/or input an audio signal. For example, the audio component 1010 includes one microphone (MIC). When the device 1000 is under the operation mode, for example, a calling mode, a record mode and a speech recognition mode, the microphone is configured to receive the audio signal from outside. The received audio signal may be further stored in the memory 1004 or sent via the communication component 1016. In some embodiments, the audio component 1010 also includes one loudspeaker configured to output the audio signal.

An I/O interface 1012 provides an interface between the processing component 1002 and a peripheral interface module. The above peripheral interface module may be a keyboard, a click wheel, a button, etc. These buttons may include but are not limited to a home button, a volume button, a starting button and a locking button.

The sensor component 1014 includes one or more sensors and is configured to provide various aspects of the state assessment for the device 1000. For example, the sensor component 1014 may detect the on/off state of the device 1000, the relative positioning of the assemblies (for example, a display and a keypad of the device 1000), position change of the device 1000 or one component of the device 1000, presence or un-presence of the touch between the user and the device 1000, as well as the orientation or acceleration/deceleration and temperature change of the device 1000. The sensor component 1014 may include a proximity sensor configured to detect the presence of an adjacent object when there is no physical contact. The sensor component 1014 may also include an optical sensor (such as CMOS or a CCD image sensor) configured to be used in imaging applications. In some embodiments, the sensor component 1014 may also include an acceleration sensor, a gyro sensor, a magnetic sensor, a pressure sensor or a temperature sensor.

The communication module 1016 is configured to facilitate the wired or wireless communication between the device 1000 and other apparatuses. The device 1000 may access the wireless network on the basis of a communication standard, such as WiFi, 2G or 3G, or the combination thereof. In one exemplary embodiment, the communication component 1016 receives a broadcast signal or broadcast associated information from an external broadcast management system via a broadcast channel. In one exemplary embodiment, the communication component 1016 also includes a Near Field Communication (NFC) module, to facilitate short-range communication. For example, the NFC module may be based on Radio Frequency Identification (RFID) technology, Infrared Data Association (IrDA) technology, Ultra-Wideband (UWB) technology, Bluetooth (BT) technology and other technologies.

In an exemplary embodiment, the device 1000 may be implemented by one or more Application Specific Integrated Circuits (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, or other electronic components, and configured to implement the method described above.

In an exemplary embodiment, a non-transitory computer-readable storage medium comprising the instruction is also provided, for example, the memory 1004 comprising the instruction. The above instruction may be implemented by the processor 1020 of the device 1000 to complete the above method. For example, the non-transitory computer-readable storage medium may be a ROM, a random access memory (RAM), a CD-ROM, a magnetic tape, a floppy disk, an optical data storage devices and the like.

Those skilled in the art may think of easily other embodiments of the disclosure from consideration of the specification and practice of the disclosure disclosed herein. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A mobile payment method, **characterized in that** it comprises:
setting (S101) a payment operation state to be an operation-invalid state when receiving payment information;
receiving (S102) a hardware operation instruction input by a user; and
updating (S2013) the payment operation state to be an operation-valid state if the hardware operation instruction meets a preset condition, wherein the preset condition comprises that hardware information in the hardware operation instruction be consistent with a preset hardware information.

2. The mobile payment method according to claim 1, **characterized in that**, said updating the payment operation state to be an operation-valid state comprises:
determining that the hardware operation instruction meets the preset condition if the hardware information in the received hardware operation instruction is consistent with the preset hardware information, when the preset hardware information comprises one piece of preset hardware information; or
obtaining the hardware information in two hardware operation instructions received sequentially and a reception time of each hardware operation instruction, when the preset hardware information comprises two pieces of preset hardware information;
determining whether a reception time interval of the two hardware operation instructions is less than a first preset threshold according to the reception time of the two hardware operation instructions, if the two pieces of hardware information received sequentially in said two hardware operation instructions are consistent with the two pieces of preset hardware information, wherein the hardware operation instructions meet the preset condition if the reception time interval is smaller than the first preset threshold; or
obtaining the hardware information in hardware operation instructions received sequentially and a reception time of each hardware operation instruction, when the preset hardware information comprises at least three pieces of preset hardware information; and
determining whether a reception time interval of two consecutive hardware operation instructions is less than a second preset threshold according to the reception time of said hardware operation instructions,, if the pieces of preset hardware information received sequentially in said hardware operation instructions are consistent with the at least three pieces of preset hardware information, wherein the hardware operation instructions meet the preset condition if the reception time interval is less than the second preset threshold.

3. The mobile payment method according to claim 1 or 2, **characterized in that** it comprises:
displaying first prompt information when the payment operation state is set to be the operation-invalid state, wherein the first prompt information is configured to remind the user to implement the mobile payment in accordance with the hardware operation instruction.

4. The mobile payment method according to any one of claims 1 to 3, **characterized in that** it comprises:
counting (S305) the number of times that the received hardware operation instruction does not meet the preset condition;
cancelling (S307) the current mobile payment operation if the number of times equals to a preset number of times; and
displaying (S308) second prompt information if the number times is less than the preset number of times, wherein the second prompt information is configured to remind the user to re-implement the mobile payment in accordance with the hardware operation instruction and receive the hardware operation instruction re-input by the user.

5. The mobile payment method according to any one of claims 1 to 4, **characterized in that** it comprises:
displaying (S201) a hardware information list;
receiving (S202) a hardware selecting instruction input by the user, and selecting one or more pieces of the hardware information from the hardware information list according to the hardware selecting instruction; and
generating (S203) the preset hardware information according to said one or more selected pieces of the hardware information, and saving the preset hardware information.

6. The mobile payment method according to any one of claims 1 to 5, **characterized in that** it comprises:
acquiring (S401) a payment operation instruction input by the user, wherein the payment operation instruction comprises operation gesture information; and
displaying (S402) a payment result when the payment operation instruction meets a preset payment condition.

7. A mobile payment device, **characterized in that** it comprises:
a receiving setting module (51) configured to set a payment operation state to be an operation-invalid state when receiving payment information;
a receiving module (52) configured to receive a hardware operation instruction input by a user; and
a determining updating module (53) configured to update the payment operation state set by the receiving setting module to be an operation-valid state if the hardware operation instruction received by the receiving module meets the preset condition, wherein the preset condition comprises that the hardware information in the hardware operation instruction is consistent with preset hardware information.

8. The mobile payment device according to claim 7, **characterized in that**, the determining updating module comprises:
a first determining updating submodule (531) configured to determine that the hardware operation instruction meets the preset condition if the hardware information in the received hardware operation instruction is consistent with the preset hardware information, when the preset hardware information comprises one piece of preset hardware information; or
a second determining updating submodule (532) configured to obtain the hardware information in two hardware operation instructions received sequentially and a reception time of each hardware operation instruction, when the preset hardware information comprises two pieces of preset hardware information; and configured to determine whether a reception time interval of the two hardware operation instructions is less than a first preset threshold according to the reception time of the two hardware operation instructions, if the two pieces of preset hardware information received sequentially in said two hardware operation instructions are consistent with the two pieces of preset hardware information, wherein the hardware operation instructions meet the preset condition if the reception time interval is less than the first preset threshold; or
a third determining updating submodule (533) configured to obtain the hardware information in received hardware operation instructions received sequentially and the reception time of each hardware operation instruction, when the preset hardware information comprises at least three pieces of preset hardware information; and configured to determine whether a reception time interval of two consecutive hardware operation instructions is less than a second preset threshold according to the reception time of said hardware operation instructions, if the pieces of preset hardware information received sequentially in said hardware operation instructions are consistent with the at least three pieces of preset hardware information, wherein the hardware operation instructions meet the preset condition if the reception time interval is less than the second preset threshold.

9. The mobile payment device according to claim 7 or 8, **characterized in that** it comprises:
first display module (57) configured to display first prompt information when the receiving setting module (51) sets the payment operation state to be the operation-invalid state, wherein the first prompt information is configured to remind the user to implement the mobile payment in accordance with the hardware operation instruction.

10. The mobile payment device according to any one of claims 7 to 9, **characterized in that** it comprises:
a determining counting module (91) configured to count the number of times that the received hardware operation instruction does not meet the preset condition;
a cancelling module(92) configured to cancel a current mobile payment operation if the number of times counted by the determining counting module (91) equals to the preset number of times; and
a second display module (93) configured to display second prompt information if the number of times counted by the determining counting module (91) is less than the preset number of times, wherein the second prompt information is configured to remind the user to re-implement the mobile payment in accordance with the hardware operation instruction and receive the hardware operation instruction re-input by the user.

11. The mobile payment device according to any one of claims 7 to 10, **characterized in that** it comprises:
a list display module (54) configured to display a hardware information list;
a receiving selecting module (55) configured to receive a hardware selecting instruction input by the user and select one or more pieces of the hardware information from the hardware information list displayed by the list display module according to the hardware selecting instruction; and
a generating saving module (56) configured to generate the preset hardware information according to said one or more selected pieces of the hardware information selected by the receiving selecting module, and save the preset hardware information.

12. The mobile payment device according to any one of claims 7 to 11, **characterized in that** it comprises:
an acquiring module (58) configured to acquire a payment operation instruction input by the user, wherein the payment operation instruction comprises operation gesture information; and
a determining display module (59) configured to display a payment result when the payment operation instruction acquired by the acquiring module meets the preset payment condition.

13. A computer program including instructions for executing the steps of a mobile payment method according to any one of claims 1 to 6 when said program is executed by a computer.

14. A recording medium readable by a computer and having recorded thereon a computer program including instructions for executing the steps of a mobile payment method according to any one of claims 1 to 6.
